(19) Europäisches Patentamt
European Patent Office
Office européen des brevets

(11) EP 3 683 257 B1

(12) **EUROPÄISCHE PATENTSCHRIFT**

(45) Veröffentlichungstag und Bekanntmachung des Hinweises auf die Patenterteilung:
**04.08.2021 Patentblatt 2021/31**

(51) Int Cl.:
***C08J 5/18*** (2006.01) ***B32B 27/36*** (2006.01)
***C08J 7/04*** (2020.01) ***C08J 7/05*** (2020.01)

(21) Anmeldenummer: **20151377.7**

(22) Anmeldetag: **13.01.2020**

(54) **BIAXIAL ORIENTIERTE, UV-STABILISIERTE, EIN- ODER MEHRSCHICHTIGE POLYESTERFOLIE MIT MINDESTENS EINSEITIGER ANTIREFLEX UND FLAMMGESCHÜTZTER-BESCHICHTUNG (ANTIGLARE) UND EINER TRANSPARENZ VON MINDESTENS 93,5%**

BIAXIALLY ORIENTED, UV-STABILIZED, SINGLE OR MULTI-LAYER POLYESTER FILM WITH AT LEAST ONE-SIDED ANTIREFLECTION AND FLAME-RETARDANT COATING (ANTIGLARE) AND A TRANSPARENCY OF AT LEAST 93.5%

FEUILLE POLYESTER MONO OU MULTICOUCHE ORIENTÉ BIAXIALLEMENT, STABILISÉE AUX UV, POURVUE DE REVÊTEMENT ANTIREFLET ET IGNIFUGE (ANTI-ÉBLOUISSEMENT) AU MOINS D'UN COTÉ ET AYANT UNE TRANSPARENCE D'AU MOINS 93,5 %

(84) Benannte Vertragsstaaten:
**DE FR GB LU NL SE**

(30) Priorität: **18.01.2019 DE 102019200626**

(43) Veröffentlichungstag der Anmeldung:
**22.07.2020 Patentblatt 2020/30**

(73) Patentinhaber: **Mitsubishi Polyester Film GmbH**
**65203 Wiesbaden (DE)**

(72) Erfinder:
- **Bork, Andreas**
  **67593 Westhofen (DE)**
- **Lohre, Claudia**
  **65195 Wiesbaden (DE)**
- **Ünker, Yavuz**
  **55268 Nieder-Olm (DE)**
- **Herbst, Thiemo**
  **55116 Mainz (DE)**
- **Fischer, Viktor**
  **68723 Oftersheim (DE)**
- **Audörsch, Stephan**
  **64283 Darmstadt (DE)**

(74) Vertreter: **Schweitzer, Klaus**
**Plate Schweitzer Zounek**
**Patentanwälte**
**Rheingaustrasse 196**
**65203 Wiesbaden (DE)**

(56) Entgegenhaltungen:
**EP-A1- 3 251 841** **EP-A2- 0 144 948**
**DE-A1- 10 043 779**

EP 3 683 257 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft eine hochtransparente, biaxial orientierte, UV- und flammstabile Polyesterfolie, welche mindestens einseitig mit einer Beschichtung ausgestattet ist, die die Reflektion von sichtbarem Licht und die Brennbarkeit reduziert. Die erfindungsgemäße Folie eignet sich zur Herstellung von Gewächshausenergiesparmatten, insbesondere für die Kultur von Pflanzen mit hohem Lichtanspruch wie z.B. Tomaten. Die Folie weist spezielle Transparenzeigenschaften, eine hohe UV-Stabilität und gute Brandeigenschaften auf. Die Erfindung betrifft ferner ein Verfahren zur Herstellung der Polyesterfolie sowie ihre Verwendung in Gewächshäusern.

## Hintergrund

Folien für Energiesparmatten in Gewächshäusern müssen eine Reihe von Anforderungen erfüllen. Zum einen soll der für das Pflanzenwachstum benötigte Teil des Lichtes die Folie/ Gewächshausenergiesparmatten passieren und in der Nacht und insbesondere in den Morgenstunden soll die Gewächshausenergiesparmatten zudem die vom Boden aufsteigende Wärme sowohl durch Konvektionsbremse, als auch durch Reflektion und Rückstrahlung im Gewächshaus halten. Ohne die Gewächshausenergiesparmatte steigt der Energieverbrauch im Gewächshaus an und die Einstellung des idealen Klimas wird erschwert. Nachteil der Matten ist aber generell die zusätzliche Schicht im Strahlengang der Sonne, die sowohl durch Absorption, als auch durch Reflektion die zur Verfügung stehende Lichtmenge reduziert. Um die Mittagszeit kann die Energiesparmatte aufgezogen werden, oder durch zu hohen Lichteinfall kann sogar der Einsatz von Energiesparmatten zur Kühlung notwendig werden. In den Morgenstunden, ist die Energiesparmatte aber von besonderer Bedeutung, da hier die für das Pflanzenwachstum notwendige Temperatur erreicht werden muss und gleichzeitig so viel Licht wie möglich zur Verfügung gestellt werden muss, um eine hohe Photosyntheseaktivität zu gewährleisten. Insbesondere in den Morgenstunden, steht die Sonne aber noch in einem niedrigen Winkel am Horizont, was an einer Folienoberfläche zu noch höherer Reflektion führt, als bei höherem Sonnenstand. Insbesondere zum Haupteinsatzzeitpunkt der Matten muss die Reflektion also reduziert und die Transmission maximiert werden.

Die Folie muss zudem eine UV-Stabilität aufweisen, die es ermöglicht die Energiesparmatte mindestens 5 Jahre in einem Gewächshaus im Einsatz zu lassen, ohne dabei signifikant zu vergilben oder Versprödungen oder Rissbildungen an der Oberfläche zu zeigen oder in den mechanischen Eigenschaften gravierend nachzulassen, oder deutlich an Transparenz zu verlieren.

Da Brände in Gewächshäusern eine Quelle hoher wirtschaftlicher Schäden sind, muss die Folie und die daraus hergestellte Schattenmatte eine reduzierte Entflammbarkeit aufweisen, so dass sich ein Feuer nicht zu schnell ausbreiten kann.

## Stand der Technik

In der EP3064549 ist eine flammgeschützte, biaxial orientierte Polyesterfolie beschrieben. Als Flammschutz finden Partikel aus Aluminium dimethylphosphinat / diethylphosphinat Verwendung. Diese befinden sich innerhalb der extrudierten Polyesterschichten. Die durchschnittliche Partikelgröße wird beispielsweise mit 2-3 $\mu$m angegeben. Erfahrungsgemäß trüben derlei Partikel die Folie ein und senken die Transparenz.

EP1368405 behandelt mehrere, phosphorbasierende Flammschutzmittel, wie DOPO (CAS 35948-25-5) und Derivate davon und den Einsatz in biaxial orientierten Polyesterfolien. Die beschriebenen Stabilisatoren eignen sich zur Herstellung transparenter PET-Folien. Die beschriebenen Derivate von DOPO (CAS 35948-25-5) eignen sich besonders für den PET-Prozess, da sie in die PET-Kette einpolymerisieren können. Erfahrungsgemäß verschlechtert sich auch bei einer so flammgeschützten Folie durch Applikation einer ein- oder doppelseitig aufgebrachten Antireflexionsbeschichtung die Flammstabilität deutlich.

Eine Schicht mit Flammstabilisator wird in der EP1441001 auf eine bereits hergestellte, beidseitig beschichtete und biaxial orientierte Polyesterfolie aufgebracht, um den ganzen Verbund zu stabilisieren. Die Flammstabilisator-Schicht enthält eine Gas-generierende Verbindung wie Magnesiumhydroxid. Magnesiumhydroxid wird auch per Beschichtung auf einen Polymerfilm in EP1527110 als Flammstabilisator aufgetragen.

Eine Schicht mit Magnesiumhydroxid (oder Aluminiumhydroxid) wirkt erst ab einer gewissen Dicke flammhemmend und ist deshalb für Herstellprozesse, die eine Beschichtung während der Produktion aufbringen, ungeeignet.

Darüber hinaus ist Magnesiumhydroxid ungeeignet für die direkte Verarbeitung mit PET in der Schmelze, da sich die Kettenlänge und damit die Viskosität des PET stark reduziert und nicht mehr stabil herstellbar ist.

EP3251841 behandelt eine biaxial orientierte, UV-stabilisierte, ein- oder mehrschichtige Polyesterfolie mit mindestens einseitiger antireflex-Beschichtung (antiglare) und einer Transparenz von mindestens 93,5 %. Die Schrift beschreibt Flammstabilisatoren für die Basisfolie und legt nahe, dass kein Flammstabilisator bei Einhaltung einer gewissen Partikelkonzentration notwendig ist Erfahrungsgemäß verschlechtern Antireflexionsschichten, etwa aus Acrylaten, Polyurethanen und Silikonen, auf einer oder beiden Seiten einer Polyester-Folie die Brandeigenschaften drastisch.

## Problem /Aufgabe

Die oben beschriebenen Folien aus dem Stand der Technik erfüllen entweder nicht die Anforderungen an die optischen Eigenschaften (Transparenz mindestens 93,5%; Trübung maximal 8%) und/oder die Anforderungen an das Brandverhalten. Partikelhaltige Systeme trüben das Endlaminat meist ein und reduzieren die Transparenz. Die zur Reduktion der Reflexion auf die Polyesterfolie aufgebrachte Antireflexschicht oder -Schichten verschlechtern die Brandeigenschaften des gesamten Laminats, in besonderem Maße wenn die Antireflexionsbeschichtung beidseitig aufgetragen wird. Eine Flammstabilisierung einzig der Basisfolie oder eine niedrige Partikelkonzentration in der Basisfolie können überraschenderweise den negativen Einfluss einer einseitig und vor allem einer beidseitig aufgetragenen Antifreflexionsbeschichtung nicht komplett kompensieren.

Aufgabe der vorliegenden Erfindung ist es die Nachteile des Standes der Technik zu überwinden und eine Folie für die oben genannte Verwendung zur Verfügung zu stellen. Neben der Erfüllung der optischen Eigenschaften wie einer Transparenz von min. 93,5 % und einer Trübung von max. 8 % soll die Folie die Anforderungen an Flammstabilität erfüllen (d.h. im Vergleich nicht flammstabilisierten beschichteten Polyesterfolien eine verringerte Entflammbarkeit aufweisen).

Die Flammstabilität soll über den gesamten Lebenszyklus im Gewächshaus die Anforderungen erfüllen und nicht mit der Zeit schlechter werden.

## Lösung

Gelöst wird die Aufgabe durch eine Ein- oder Mehrschichtige biaxial orientierte Polyesterfolie, die auf mindestens einer Folienoberfläche eine Beschichtung zur Transparenzerhöhung aufweist, dadurch gekennzeichnet, dass:

- Die Polyesterfolie einen Partikelanteil von maximal 0,5 Gew.-% aufweist und
- die Beschichtung das Trocknungsprodukt einer Dispersion und/oder Lösung auf Wasser- oder Lösemittel-Basis darstellt, wobei

  (i) die Beschichtung eine Trockenschichtdicke von 60 - 130 nm aufweist,

  (ii) die Beschichtung mindestens ein Acrylsäure- und/oder Methacrylsäure-basiertes Polymer zur Transparenzerhöhung und

  (iii) mindestens ein Alkylphosphonat und/oder Oligo-alkylphosphonat als Flammstabilisator umfasst, wobei

  (iv) die Beschichtung einen Brechungsindex n < 1,64 aufweist und

  (v) der Phosphoranteil der Beschichtung zwischen 2 und 18 Gew.-% liegt.

Eine solche Polyesterfolie weist dann folgende Eigenschaften auf:

- eine Transparenz von min. 93,5 %,
- eine Trübung von max. 8%,
- im Brandtest liegt die Anzahl der Proben, die nach der ersten Beflammung bis zum Haltering brennen bei unter 3 von 5, sowohl vor, als auch nach Bewitterung.

## Detailbeschreibung

Die erfindungsgemäße Polyesterfolie besteht aus Polyester (im Folgenden u.a. auch Basismaterial genannt), Additiven und mindestens einer Beschichtung (im Folgenden auch Antireflexionsmodifikation oder Antireflexionsbeschichtung genannt): Es wird zwischen "Schichten" und "Beschichtung" unterschieden; unter einer "Schicht" wird eine extrudierte bzw. coextrudierte, hauptsächlich aus Polyester bestehende Schicht der Polyesterfolie verstanden (z.B. eine Basisschicht, Zwischenschicht oder Deckschicht), während eine "Beschichtung" auf eine oder beide Oberflächen der (ggf. mehrschichtigen) Polyesterfolie als Lösung oder Dispersion aufgetragen und dann getrocknet wird; dies kann "in-line", also im eigentlichen Folienherstellprozess, oder "off-line", also nach Herstellung der Folie, geschehen.

**Basismaterial**

Die Gesamtfoliendicke beträgt mind. 10 μm und maximal 40 μm. Bevorzugt liegt die Foliendicke bei mindestens 14 und maximal 23 μm und idealerweise bei mindestens 14,5 μm und maximal 20 μm. Liegt die Foliendicke unter 10 μm, so reicht die mechanische Festigkeit der Folie nicht mehr aus, um die in der Anwendung in der Energiesparmatte auftretenden Züge ohne Verdehnungen aufzunehmen. Oberhalb von 40 μm wird die Folie zu steif und im geöffneten, aufgezogenen Zustand entsteht ein zu großer "Folienballen" mit entsprechender zu großer Abschattung.

Die Folie weist eine Basisschicht B auf. Einschichtige Folien bestehen nur aus dieser Basisschicht. Bei einer mehrschichtigen Ausführungsform besteht die Folie aus der (d.h. einer) Basisschicht und mindestens einer weiteren Schicht, die je nach Positionierung in der Folie als Zwischenschicht (mindestens jeweils eine weitere Schicht befindet sich dann auf jeder der beiden Oberflächen) oder Deckschicht (die Schicht bildet eine Außenschicht der Folie) bezeichnet wird. Bei der mehrschichtigen Ausführung ist die Dicke der Basisschicht mindestens genauso groß wie die Summe der übrigen Schichtdicken. Bevorzugt liegt die Dicke der Basisschicht bei mindestens 55 % der Gesamtfoliendicke und idealerweise bei mindestens 63 % der Gesamtfoliendicke. Die Dicke der übrigen Schichten, bevorzugt der Deckschichten beträgt mindestens 0,5 μm, bevorzugt mindestens 0,6 μm und idealerweise mindestens 0,7 μm. Die Dicke der Deckschichten beträgt maximal 3 μm und bevorzugt maximal 2,5 μm und idealerweise maximal 1,5 μm. Unterhalb von 0,5 μm sinkt die Prozessstabilität und die Dickengleichmäßigkeit der Deckschicht. Ab 0,7 μm wird eine sehr gute Prozessstabilität erreicht. Wenn die Deckschichten zu dick werden sinkt die Wirtschaftlichkeit, da aus Gründen der Eigenschaftssicherung (insbesondere der UV-Stabilität), Regenerate (d.h. aufgearbeiteter Produktionsverschnitt/Folienreste) nur der Basis zugeführt werden sollten und bei zu geringer Basisschichtdicke im Vergleich zur Gesamtdicke muss dieser Schicht dann prozentual zu viel Regenerat zugeführt werden, um den Regeneratkreislauf zu schließen. Dies kann dann auch über die Basisschicht die Eigenschaften wie z.B. UV-Stabilität und Transparenz negativ beeinflussen. Zudem enthalten die Deckschichten in der Regel Partikel zur Verbesserung der Schlupfeigenschaften (Verbesserung der Wickelbarkeit). Diese Partikel führen zu einem Transparenzverlust durch Rückstreuung. Wird der Anteil der Deckschichten mit solchen Partikeln zu groß, wird das Erreichen der erfindungsgemäßen Transparenzeigenschaften deutlich erschwert.

Hohe Deckschichtdicken der gegebenenfalls vorhandenen Foliendeckschicht mit Antireflexmodifikation führen infolge des bei Copolymer-modifizierten Schichten notwendigen höheren UV-Stabilisatorgehalts dieser Schicht (s.u.) zu einer unerwünschten Kostensteigerung.

UV-Stabilisierung

Die Folie muss zudem eine geringe Transmission im Wellenlängenbereich von unterhalb 370 nm bis 300 nm aufweisen. Diese liegt bei jeder Wellenlänge im angegebenen Bereich bei kleiner 40 % bevorzugt bei kleiner 30 % und idealerweise bei kleiner 15 % (Verfahren s. Meßmethoden). Hierdurch wird die Folie vor Versprödung und Vergilbung geschützt, zudem werden hierdurch die Pflanzen und Installationen im Gewächshaus vor dem UV-Licht geschützt. Zwischen 390 und 400 nm liegt die Transparenz in einer bevorzugten Ausführungsform bei größer 20 %, bevorzugt bei größer 30 % und idealerweise bei größer 40 %, da dieser Wellenlängenbereich bereits deutlich Photosynthese-aktiv ist und das Pflanzenwachstum bei zu starker Filterung in diesem Wellenlängenbereich negativ beeinflusst würde. Die geringe UV Durchlässigkeit wird durch den Zusatz von organischem UV-Stabilisator erzielt. Eine geringe Durchlässigkeit für UV-Licht schützt den gegebenenfalls vorhandenen Flammstabilisator vor schneller Zerstörung und starker Vergilbung. Der organische UV-Stabilisator wird dabei aus der Gruppe der Triazine, Benzotriazole oder Benzoxazinone ausgewählt. Besonders bevorzugt sind dabei Triazine, u.a. weil sie bei den für PET üblichen Verarbeitungstemperaturen von 275 - 310 °C eine gute thermische Stabilität und eine geringe Ausgasung aus der Folie aufweisen. Insbesondere geeignet ist 2-(4,6-Diphenyl-1,3,5-triazin-2-yl)-5-(hexyl)oxy-phenol (Tinuvin® 1577). Am meisten bevorzugt sind dabei 2-(2'-hydroxyphenyl)-4,6- bis(4-phenylphenyl) Triazine, wie sie z.B. von der BASF unter dem Markennamen Tinuvin 1600™ vertrieben werden. Werden diese eingesetzt, können die bevorzugten niedrigen Transparenzen unterhalb von 370 nm schon bei geringeren Stabilisator-Konzentrationen erreicht werden, wobei gleichzeitig eine höhere Transparenz bei Wellenlängen oberhalb von 390 nm erreicht wird.

Die Folie, bzw. im Fall einer Mehrschichtfolie mindestens eine Deckschicht, bevorzugt beide Deckschichten enthalten daher mindestens einen organischen UV-Stabilisator. UV-Stabilisatoren werden der/den Deckschicht/ten bzw. der Monofolie in einer bevorzugten Ausführungsform in Mengen zwischen 0,3 und 3 Gew.-%, bezogen auf das Gewicht der jeweiligen Schicht, zugegeben. Besonders bevorzugt ist ein UV-Stabilisatorgehalt zwischen 0,75 und 2,8 Gew.-%. Idealerweise enthalten die Deckschichten zwischen 1,2 und 2,5 Gew.-% UV-Stabilisator. In der mehrschichtigen Ausführungsform der Folie enthält, neben den Deckschichten, bevorzugt auch die Basisschicht einen UV-Stabilisator, wobei der Gehalt an UV-Stabilisator in Gew.-% in dieser Basisschicht bevorzugt niedriger ist, als in der/den Deckschicht(en). Diese angegebenen Gehalte in der/den Deckschichten beziehen sich auf Triazinderivate. Wird statt eines Triazinderivats komplett oder teilweise ein UV-Stabilisator aus der Gruppe der Benzotriazole oder Benzoxazinone eingesetzt, so sollte zweckmäßigerweise der ersetzte Anteil der Triazin-Komponente durch die 1,5 fache Menge einer Benzotriazol- oder

Benzoxazinon-Komponente substituiert werden.

Weißfärbende und gleichzeitig mit dem Hauptbestandteil Polyester inkompatible Polymere, wie Polypropylen, Cycloolefincopolymere (COC's), Polyethylen, unvernetztes Polystyrol etc. sind im Sinn der Erfindung zu weniger als 0,1 Gew.% (bezogen auf das Gewicht der Folie) und idealerweise überhaupt nicht (zu 0 Gew.%) enthalten, da diese die Transparenz stark senken und das Brandverhalten stark negativ beeinflussen und unter UV-Einfluss zu starker Vergilbung neigen und daher erhebliche zusätzliche Mengen an UV-Stabilisator benötigen würden, was die Wirtschaftlichkeit deutlich verschlechtert.

Basis- und Deckschicht(en) können jedoch Partikel zur Verbesserung der Wickelbarkeit enthalten, solange diese nicht weißfärbend und gleichzeitig inkompatibel (s.o.) sind. Solche anorganischen oder organischen Partikel sind z. B. Kalziumcarbonat, Apatit, Siliziumdioxide, Aluminiumoxid, vernetztes Polystyrol, vernetztes Polymethylmethacrylat (PMMA), Zeolithe und andere Silikate wie Aluminiumsilikate, oder auch kompatible Weißpigmente wie $TiO_2$ oder $BaSO_4$. Diese Partikel werden bevorzugt den Deckschichten zur Verbesserung der Wickelbarkeit der Folie zugegeben. Wenn solche Partikel zugegeben werden, ist die Verwendung von Siliziumdioxid basierten Partikeln bevorzugt, da diese wenig Transparenz reduzierend wirken. Der Anteil dieser oder anderen Partikel beträgt in keiner Schicht mehr als 3 Gew.-% und liegt bevorzugt bei unter 1 Gew.-% und idealerweise bei unter 0,2 Gew.-% in jeder Schicht, jeweils bezogen auf das Gesamtgewicht der betreffenden Schicht. Diese Partikel werden im Fall einer mehrschichtigen Ausführungsform bevorzugt nur einer oder beiden Deckschichten zugesetzt und gelangen nur zu einem geringen Anteil über das Regenerat in die Basisschicht. So wird eine minimale Reduktion der Transparenz durch die für die Wicklung benötigten Partikel erreicht. In einer bevorzugten Ausführungsform mit guter Wickelbarkeit enthält mindestens eine Außenschicht mindestens 0,07 Gew. % Partikel.

Erreicht wird die erfindungsgemäße Transparenz, wenn die erfindungsgemäßen Rohstoffe und Additiv- und/oder Partikelgehalte verwendet werden. Hauptsächlich wird die Erhöhung der Transparenz aber durch die auf mindestens einer Folienaußenseite vorhandenen Antireflexionsbeschichtung erreicht.

Allgemein verschlechtern Partikel, wie Weiß- oder Mattpartikel die Flammeigenschaften einer biaxial orientierten Folie. Je nach Kompatibilität des Partikels zur Polymermatrix, können beim Verstrecken Hohlräume um die Partikel entstehen. Je Inkompatibler die Partikel zur Matrix, desto mehr Hohlräume entstehen. Diese Hohlräume füllen sich mit Luft und können im Brandfall dem Feuer Sauerstoff zuführen und den Brand verschlimmern. Aus diesem Grund erweist es sich bezüglich Brennbarkeit meist als vorteilhaft, möglichst wenig Partikel einzusetzen. Ausnahmen sind Flammschutz-Partikel, wie sie etwa im Stand der Technik beschrieben sind.

Aus diesem Grund liegt der Anteil an Partikel, wie Weiß- (etwa ZnO, $TiO_2$, $BaSO_4$) oder Mattpartikel (PMMA, $SiO_2$, PDMSQ) bevorzugt unter 0,5 Gew.-% (bezüglich der gesamten Folie).

**Beschichtung**

Die erfindungsgemäße Folie weist mindestens einseitig eine Beschichtung mit einem Material auf, welches einen geringeren Brechungsindex als die Polyesterfolie aufweist. Der Brechungsindex bei einer Wellenlänge von 589 nm in Maschinenrichtung der Folie liegt dabei unterhalb von 1,64, bevorzugt unterhalb von 1,60 und idealerweise unterhalb von 1,58.

Die erfindungsgemäße Beschichtung enthält mindestens zwei Komponenten und zwar mindestens eine acrylische Komponente und eine Komponente, die zur Flammstabilisierung dient. Die Komponenten werden im Folgenden beschrieben.

<u>Acrylische Komponente</u>

Geeignete Acrylate sind beispielsweise in der EP-A-0144948 beschrieben Beschichtungen auf Acrylatbasis sind deshalb bevorzugt, weil diese im Gewächshaus nicht zum Ausschwitzen von Beschichtungskomponenten bzw. Abblättern von Teilen der Beschichtung neigen. Besonders geeignet sind Polyacrylate.

Zur Einstellung der optischen Eigenschaften sind prinzipiell auch Silikone, Polyurethane oder Polyvinylacetat geeignet. Es konnte jedoch gezeigt werden, dass die durch die Beschichtung eingebrachte Brandlast bei Acrylaten geringer war und sich diese besser zur Stabilisierung eignen.

Die als erfindungsgemäße acrlyische Komponente bestehet im Wesentlichen aus mindestens 50 Gew.-% eines oder mehrerer polymerisierter acrylischer und/oder methacrylischer Monomere.

Die acrylische Komponente besteht bevorzugt aus einem Ester der Acryl- oder Methacrylsäure, insbesondere einem Alkylester, dessen Alkylgruppe bis zu zehn C-Atome enthält, wie z.B. die Methyl-, Ethyl-, n-Propyl-, Isopropyl-, n-Butyl-, Isobutyl-, tertiäre Butyl-, Hexyl-, 2-Ethylhexyl-, Heptyl- und n-Octylgruppe. Ganz besonders bevorzugt werden Haftvermittlercopolymere aus einem Alkylacrylat, z.B. Ethylacrylat oder Butylacrylat, zusammen mit einem Alkylmethacrylat, z.B. Methylmethacrylat, insbesondere zu gleichen molaren Anteilen und in einer Gesamtmenge von 70 bis 95 Gew.-%, eingesetzt. Das Acrylatcomonomere solcher Acryl/Methacrylkombinationen ist vorzugsweise in einem Anteil

von 15 bis 65 Mol-% anwesend und das Methacrylatcomonomere vorzugsweise in einem Anteil, der im allgemeinen um 5 bis 20 Mol-% größer ist als der Anteil des Acrylatcomonomeren. Das Methacrylat ist vorzugsweise in einem Anteil von 35 bis 85 Mol-% in der Kombination enthalten.

In einer weiteren Ausführungsform, kann die acrylische Komponente weitere Comonomere in einem Anteil von 0 bis 15 Gew.-% umfassen, die dazu geeignet sind, unter Einwirkung von erhöhter Temperatur eine intermolekulare Vernetzung auszubilden.

Geeignete, zur Ausbildung von Vernetzungen befähigte Comonomere sind z.B. N-Methylolacrylamid, N-Methylolmethacrylamid und die entsprechenden Ether; Epoxidmaterialien wie z.B. Glycidylacrylat, Glycidylmethacrylat und Allylglycidylether; Carboxylgruppen enthaltende Monomere wie z.B. Crotonsäure, Itaconsäure oder Acrylsäure; Anhydride wie z.B. Maleinsäureanhydrid oder Itaconsäureanhydrid; Hydroxylgruppen enthaltende Monomere wie z.B. Allylalkohol und Hydroxyethyl- oder Hydroxypropylacrylat oder -methacrylat; Amide wie z.B. Acrylamid, Methacrylamid oder Maleinsäureamid und Isocyanate wie z.B. Vinylisocyanat oder Allylisocyanat.

Von den obengenannten Comonomeren werden N-Methylolacrylamid und N-Methylolmethacrylamid bevorzugt, und zwar in erster Linie deswegen, weil Copolymerketten, die eines dieser Monomere enthalten, unter der Einwirkung von erhöhten Temperaturen zur Kondensation miteinander und somit zur Ausbildung der gewünschten intermolekularen Vernetzungen befähigt sind. Bei Copolymeren, welche die anderen funktionellen Monomeren enthalten, ist es notwendig, Mischungen aus mindestens zwei Copolymeren mit verschiedenen funktionellen Comonomeren herzustellen, wenn man die gewünschte Vernetzung erzielen will, z.B. Mischen eines Acryl/Crotonsäure-Copolymeren mit einem Acrylcopolymeren, das als funktionelle Gruppen Isocyanat-, Epoxid-oder N-Methylolgruppen enthält, die befähigt sind, mit sauren funktionellen Gruppen zu reagieren.

Weitere spezifische Kombinationen solcher gemischten Acrylcopolymeren umfassen Copolymere mit Monomeren, die als funktionelle Gruppen Epoxidgruppen enthalten, in Verbindung mit Copolymeren mit Monomeren, die als funktionelle Gruppen Amino-, Säureanhydrid-, Carboxyl-, Hydroxyl- oder N-Methylolgruppen enthalten; Copolymere mit Monomeren, die als funktionelle Gruppen N-Methylol- oder N-Methylolethergruppen enthalten, in Verbindung mit Copolymeren mit Monomeren, die als funktionelle Gruppen Carboxyl-, Hydroxyl- oder Aminogruppen enthalten; Copolymere mit Monomeren, die als funktionelle Gruppen Isocyanatgruppen enthalten, in Verbindung mit Copolymeren mit Monomeren, die als funktionelle Gruppen Carboxyl- oder Hydroxylgruppen enthalten, usw. Vorzugsweise sind die in den gemischten Copolymerensystemen enthaltenen funktionellen Monomeren in etwa äquimolaren Mengen anwesend.

Die acrylischen Copolymere können auch mit bis zu 49 Gew.-% eines oder mehrerer halogenfreier, nichtacrylischer, einfach ethylenisch ungesättigten Monomers interpolymerisiert sein. Geeignete Comonomere sind z.B. Dialkylmaleate wie z.B. Dioctylmaleat, Diisooctylmaleat und Dibutylmaleat, Vinylester einer Versatic-Säure, Vinylacetat, Styrol, Acrylnitril und ähnliche Stoffe.

Die für die Zwecke dieser Erfindung bevorzugten zur Vernetzung befähigten, gemischten Copolymerzusammensetzungen sind Mischungen im Verhältnis von etwa 50 : 50 (Gew.-%) eines Ethylacrylat/Methylmethacrylat/Crotonsäure-Copolymeren mit einem Ethylacrylat/Methylmethacrylat/Glycidylacrylat-Copolymeren; Mischungen eines Ethylacrylat/Methylmethacrylat/Methacrylamid-Copolymeren mit einem Ethylacrylat/Methylmethacrylat/N-Methylolacrylamid-Copolymeren; oder Zusammensetzungen auf der Basis von Copolymeren von Ethylacrylat/Methylmethacrylat/N-Methylolacrylamid wie z.B. Copolymere, die 50 bis 99 Gew.-% an Acryl- und/oder Methacrylmonomeren, 0 bis 49 Gew.-% des einfach ethylenisch ungesättigten Monomeren und 1 bis 15 Gew.-% an N-Methylolacrylamid enthalten. Besonders bevorzugt werden Copolymere eingesetzt, die 70 bis 95 Gew.-% an Acryl- und/oder Methacrylmonomeren, 0 bis 25 Gew.-% des einfach ethylenisch ungesättigten Monomeren und 5 bis 10 Gew.-% an N-Methylolacrylamid enthalten.

Weiterhin können zusätzlich zur Acrylat-Komponente ein fremdes Vernetzungsmittel wie z.B.: ein Melamin- oder Harnstoff-Formaldehyd-Kondensationsprodukt eingesetzt werden. Diese sollten jedoch zu nicht mehr als 3 Gew.-% (hinsichtlich der getrockneten Beschichtungsmasse) in der Beschichtung enthalten sein, da insbesondere fremde Vernetzungsmittel mit einem hohen Stickstoffanteil (z.B. Melamin) beim Regenerieren eine Gelbfärbung der PET-Folie verursachen können.

In einer bevorzugten Ausführungsform enthält die getrocknete Acrylatbeschichtung weniger als 10 Gew.%, besonders bevorzugt weniger als 5 Gew.% und idealerweise weniger als 1 Gew.% Wiederholungseinheiten, die ein aromatisches Strukturelement enthalten. Oberhalb von 10 Gew. % Anteil an Wiederholungseinheiten mit aromatischem Strukturelement kommt es zu einer deutlichen Verschlechterung der Bewitterungsstabilität der Beschichtung.

<u>Komponente zur Flammstabilisierung</u>

Die beschriebenen und für die Anti-Reflex(ions)-Anwendung geeigneten Beschichtungskomponenten werden mindestens ein- und bevorzugt beidseitig auf die Oberfläche (einseitig), bzw. die jeweils gegenüberliegenden Oberflächen (beidseitig) der ein- oder mehrschichtigen Polyesterfolie aufgetragen. Dabei führt bereits die im Verhältnis zur Polyesterfoliendicke dünne Beschichtung, die im erfindungsgemäßen Schichtdickenbereich (s.u.) ein- oder beidseitig aufgebracht wurde, zu einer Verschlechterung der Brandeigenschaften der Polyesterfolie im Vergleich zur nicht beschichteten Polyesterfolie (sowohl vor als auch nach Bewitterungstest). Aufgrund dieses Ergebnisses liegt es zunächst nahe, auf Flammstabilisatoren zurückzugreifen, um die Brandeigenschaften zu verbessern (d.h. die Entflammbarkeit zu verringern). Es hat sich jedoch herausgestellt, die Verwendung eines Flammstabilisators im Basismaterial (also im Polyester der nicht beschichteten Polyesterfolie) zu keiner wesentlichen Verbesserung der beschichteten Polyesterfolie führt und somit das gewünschte Brandverhalten i.d.R. nicht eingestellt werden kann. Zudem wirkt sich ein hoher Gehalt an Flammstabilisator in der Basis negativ auf die Transparenz und insbesondere die Trübung aus, sodass der maximale Gehalt an Flammstabilisator im Basismaterial dahingehend limitiert ist.

Überraschenderweise konnte gezeigt werden, dass es ausreichend ist, ausschließlich die Antireflexionsbeschichtung mit dem erfindungsgemäßen Flammstabilisator auszustatten, wobei es nicht notwendig ist, das Basismaterial zusätzlich mit einem Flammstabilisator auszustatten, um das erfindungsgemäße Brandverhalten zu erreichen. Die zusätzliche Verwendung eines Flammstabilisators im Basismaterial kann prinzipiell realisiert werden, führt jedoch zu keiner wesentlichen Verbesserung des Brandverhaltens, weshalb aus Gründen der Wirtschaftlichkeit darauf verzichtet werden kann.

Ein Aufbau, bei dem sich der Flammstabilisator einzig in der Folie, nicht aber in der im Vergleich zur Polyesterfolie dünnen Beschichtung befindet, und der die Anforderungen an das Brandverhalten vor den Bewitterungstests besteht, hatte überraschenderweise nach der Bewitterung schlechtere Brandeigenschaften. Der negative Einfluss der Antireflektions-Beschichtung scheint sich während der Bewitterung durch (UV-)Licht und Wassereinwirkung zu verstärken, so dass die Flammstabilisierung der Folie diesen Effekt nicht mehr ausgleichen kann.

Der erfindungsgemäße Aufbau hingegen, bei dem die Beschichtung auf mindestens einer Seite der Folie mindestens einen Flammstabilisator enthält, zeigte bei einer Folie sowohl mit als auch ohne Flammstabilisator auch nach der Bewitterung noch ausreichend gute Brandeigenschaften. Solche Folien brennen im Brandtest nach der ersten Beflammung bei unter 3 von 5 Proben bis zum Haltering.

Der Beschichtungsrezeptur wird ein oder mehrere Flammstabilisatoren hinzugefügt, die die Brandeigenschaften der gesamten beschichteten Polyesterfolie verbessern. Partikuläre Stoffe wie Ammoniumphosphate, Aluminiumhydroxid oder Magnesiumhydroxid verbessern zwar die Flammbeständigkeit des Laminats, wirken sich jedoch in den erforderlichen Mengen negativ auf die optischen Eigenschaften aus. Abhängig von der Partikelgröße steigt die Trübung und die Transparenz kann sinken. Aluminium- und Magnesiumhydroxid, welches Erwähnung in EP1441001 findet, wirken aufgrund des flammstabilisierenden Mechanismus durch Wasserabspaltung nur in solchen hohen Zugabemengen ausreichend stabilisierend, bei denen die Gesamtfolie nicht mehr die erfinderischen, optischen Eigenschaften erreicht. Darüber hinaus gestaltet sich eine direkte Verarbeitung mit solchermaßen flammstabil ausgerüsteten Polyestern per Extrusion aufgrund hydrolytischen Polyesterabbaus als schwierig. Sofern der Einsatz von Folienverschnitt und Folieneigenregenerat/-eigenrezyklat im Herstellungsprozess vorgesehen ist, würden sich zudem in der Beschichtung enthaltene Aluminium- oder Magnesiumhydroxide negativ auf den Verarbeitungsprozess (insbesondere die Extrusion) auswirken, da sie die hydrolytische Zersetzung des Polyester begünstigen, wodurch die Viskosität des eingesetzten Polyester herabgesetzt wird. In einer bevorzugten Ausführungsform wird jedoch Regenerat eingesetzt und eine oder beide Folienoberflächen werden inline mit der erfindungsgemäßen Beschichtung beschichtet, um wirtschaftlich produzieren zu können.

Erfindungsgemäße Flammstabilisatoren weisen folgende Struktur a) und/oder b) auf:

a)

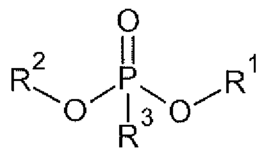

b)

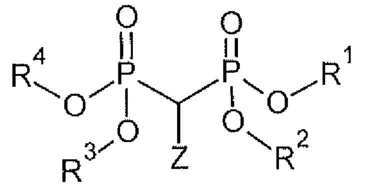

wobei $R^1$, $R^2$, $R^3$ und $R^4$ unabhängig voneinander folgende Rest-Gruppen darstellen können: H; lineare Alkyle mit $-(CH_2)_n-CH_3$ (n= 0-7); Isopropyl; Iso- oder Tertbutyl; lineare Alkylalkohole mit $-(CH_2)_n-CH_2-OH$ (n= 0-3),

Isopropylalkohol oder lineare Alkylsäuren, bzw. Alkylsäureester mit der Struktur $-(CH_2)_n-COOR^5$ (mit R5 = H;$-(CH_2)_n-CH_3$ (n= 0-3)); wobei mindestens eine Rest-Gruppe ($R^1$-$R^4$) kein H darstellt.

Z stellt einen Rest dar, der durch folgende Gruppen dargestellt werden kann H; lineare Alkyle mit $-(CH_2)_n-CH_3$ (n= 0-10); Isopropyl; Iso- oder Tertbutyl; lineare Alkylalkohole mit $-(CH_2)_n-CH_2-OH$ (n= 0-5), Isopropylalkohol oder lineare Alkylsäuren, bzw. Alkylsäureester mit der Struktur $-(CH_2)_n-COOR^5$ (mit $R^5$ = H;$-(CH_2)_n-CH_3$ (n= 0-3)).

Besonders bevorzugte Flammstabilisatoren umfassen Verbindungen auf Basis von phosphororganischen Verbindungen. Als problematisch bei der Verarbeitung erwiesen sich Phenyl-substituierte Phosphatverbindungen, wie Triphenylphosphat, Bisphenol A bis(diphenylphosphate) (CAS 5945-33-5) oder Oligomeres aus Hexaphenoxycyclotriphosphazene (28212-48-8). Diese können bei den für PET üblichen Extrusionstemperaturen Phenol freisetzen und sind deswegen ungeeignet.

Bevorzugt sind Oligo- und/oder Alkylester der Phosphorsäure oder Phosphonsäure. Diese lösen sich in der Polymermatrix der Antireflexionsbeschichtung und verursachen anders als eingebettete Partikel keine Reflexion oder Lichtablenkung. Der Brechungsindex der resultierenden Beschichtung liegt auch nach Zugabe derartiger Flammstabilisatoren im bevorzugten Bereich. Außerdem sind sie mit dem Herstellungsprozess kompatibel. Der Brechungsindex $n_D$ des Alkylphosphonats liegt bevorzugt unter 1,500, besonders bevorzugt unter 1,480 und ganz besonders bevorzugt unter 1,4700. Liegt der Brechungsindex des verwendeten Alkylphosphonats zu hoch, verringert sich der Antireflexionseffekt der gesamten Beschichtung zu sehr und die Transparenz ist zu niedrig.

Bevorzugt handelt es sich um ein Alkylphosphonat und/oder Oligo-alkylphosphonat (bevorzugt mit einem $M_w$ $\leq$ 1000 g/mol). Ein Polyalkylphosphonat migriert bei den Verarbeitungsbedingungen nicht ausreichend in die polymeren Bestandteile der Antireflexionsbeschichtung. In Folge ist das Flammschutzmittel unzureichend eingebunden, lässt sich einfach abreiben und steht in Folge nicht zur Flammhemmung zur Verfügung.

Ein bevorzugtes Alkylphosphonat ist Rucocoat FR2200 von Rudolf Chemie (Geretsried, Deutschland).

Der Anteil bezogen auf Phosphor in der Antireflexionsbeschichtung liegt zwischen 2 Gew.-% und 18 Gew.-%, bevorzugt zwischen 3 Gew.-% und 17 Gew.-%, besonders bevorzugt zwischen 4 Gew.-% und 16 Gew.-%. Liegt der Anteil an Flammstabilisator bezogen auf die Antireflexionskomponente unterhalb der o.g. Grenzwerte, können die Anforderungen an die Flammbeständigkeit nicht erfüllt werden. Liegt der Anteil zu hoch, löst sich der Flammstabilisator nicht mehr vollständig in der polymeren Antireflexionskomponente und kann während der Produktion und in der späteren Anwendung ausschwitzen, beziehungsweise dazu neigen in Teilen abzublättern.

Weitere Beschichtungskomponenten

Weiterhin können der Beschichtung bis zu 10 Gew.-% Additive zugesetzt werden. Diese umfassen Tenside (ionische, nichtionische und amphotere), Schutzkolloide, UV-Stabilisatoren, Entschäumer und Biozide. Als Tenside eignen sich insbesondre SDS (Natriumdodecylsulfat), Polyethylenglycol-basierte Tenside mit einem C8-C20 Aklyschwanz (verzweigt oder nicht verzweigt) und einem polaren Kopf mit $-(CH_2-O)_n-R$ Einheiten (mit n= 8-100 und R= -OH, $-CH_3$ oder $-CH_2-CH_3$) wie z.B: Lutensol AT50 oder Tergitol.

In einer besonders bevorzugten Ausführungsform enthält die Beschichtung bezogen auf das Trockengewicht mindestens 1 Gew.% eines UV-Stabilisators, besonders bevorzugt ist dabei Tinuvin 479, oder Tinuvin 5333-DW (BASF, Ludwigshafen, Deutschland). Weniger bevorzugt sind HALS (hindered amin light stabilizers), da diese bei der Regenerierung (Rückführung von Folienresten aus der Produktion) zu einer deutlichen Gelbfärbung des Materials und damit zur Transparenzreduktion führen.

Schichtdicke

Die Trockendicke der Antireflexionsbeschichtung beträgt jeweils mindestens 60 nm bevorzugt mindestens 70 nm und insbesondere mindestens 78 nm und beträgt maximal 130 nm, bevorzugt maximal 115 nm und idealerweise maximal 110 nm. Hierdurch wird eine ideale Transparenzerhöhung im gewünschten Wellenlängenbereich erreicht. In einer bevorzugten Ausführungsform liegt die Dicke der Beschichtung bei mehr als 87 nm, und besonders bevorzugt bei mehr als 95 nm und. In dieser bevorzugten Ausführungsform liegt die Dicke der Beschichtung bevorzugt bei kleiner 115 nm und idealerweise unter 110 nm. In diesem engen Dickenbereich, ist sowohl die Transparenzerhöhung in der Nähe des Optimums und gleichzeitig ist in diesem Bereich die Reflektion des UV und Blaubereichs des Lichts gegenüber dem Rest des sichtbaren Spektrums erhöht. Dies spart einerseits UV-Stabilisator, führt aber vor allem dazu, dass sich das Blau/Rot-Verhältnis zugunsten des Rot-Anteils verschiebt. Hierdurch wird ein verbessertes Pflanzenwachstum, ein vermehrter Blüten- und Fruchtansatz erreicht und einer Vergeilung der Pflanzen entgegen gewirkt.

In einer Ausführungsform weist die der oben beschriebenen Antireflexionsbeschichtung gegenüberliegende

Folienseite ebenfalls eine Antireflexmodifikation auf. In einer bevorzugten Ausführungsform entspricht die Beschichtung der Zusammensetzung der gegenüberliegenden Beschichtung und ist in einer besonders bevorzugten Ausführungsform hinsichtlich Material und Beschichtungsdicke identisch mit der gegenüberliegenden Beschichtung.

Die Beschichtung/en werden bevorzugt inline vor der Querstreckung mittels bekannter Verfahren (z.B. reverse gravure roll oder auch meyer bar) aus bevorzugt wässriger Dispersion auf die Folie aufgebracht. In einer Ausführungsform wird die Folie offline (z.B. mittels forward gravure) beschichtet.

Zur Herstellung der Antireflexionsbeschichtung können alle Komponenten entweder trocken, bzw. pur (d.h. in nicht gelöstem bzw. nicht dispergiertem Zustand) vorgelegt und anschließend im wässrigen Medium dispergiert (bzw. gelöst), oder jeweils einzeln im wässrigen Medium vordispergiert bzw. gelöst vorgelegt und anschließend gemischt und ggf. mit Wasser verdünnt werden. Kommen die Komponenten jeweils einzeln dispergiert, bzw. gelöst zum Einsatz, so hat es sich als günstig erwiesen, wenn das resultierende Gemisch (die Antireflexionsbeschichtung) mindestens 10 min. mit einem Rührer homogenisiert wird bevor es zum Einsatz kommt. Falls die Komponenten in Reinform (d.h. in nicht gelöstem bzw. nicht dispergiertem Zustand) zum Einsatz kommen, so hat es sich als besonders günstig erwiesen, wenn bei der Dispergierung hohe Scherkräfte durch den Einsatz entsprechender Homogenisierungsverfahren aufgebracht werden.

Der nicht-wässrige Anteil der Dispersion liegt je nach Auftragungsart/Auftragungsverfahren (inline (z.B. Reverse Gravur, Mayerbar, etc.) oder offline (z.B. Forward Gravur)) bevorzugt im Bereich von 5 bis 35 Gew.-% und besonders bevorzugt im Bereich von 10 bis 30 Gew.-%.

Mit einer beidseitig aufgebrachten Antireflexionsbeschichtung können die erfindungsgemäß besonders bevorzugten Transparenzwerte von > 95,3 % erreicht werden.

**Verfahren zur Herstellung**

Die Polyesterpolymere der einzelnen Schichten werden durch Polykondensation hergestellt, entweder ausgehend von Dicarbonsäuren und Diol oder auch ausgehend von den Estern der Dicarbonsäuren, vorzugweise den Dimethylestern, und Diol. Verwendbare Polyester haben bevorzugt SV-Werte im Bereich von 500 bis 1300, wobei die einzelnen Werte weniger wichtig sind, aber der mittlere SV-Wert der eingesetzten Rohstoffe größer als 700 sein sollte und bevorzugt größer als 750 ist. Die Partikel, sowie UV-Stabilisatoren können bereits bei der Herstellung des Polyesters zugegeben werden. Hierzu werden die Partikel im Diol dispergiert, gegebenenfalls gemahlen, dekantiert oder/und filtriert und dem Reaktor, entweder im (Um)-Esterungs- oder Polykondensationsschritt zugegeben. Bevorzugt kann ein konzentriertes partikelhaltiges oder additivhaltiges Polyester-Masterbatch mit einem Zweischneckenextruder hergestellt werden und bei der Folienextrusion mit partikelfreiem Polyester verdünnt werden. Es hat sich dabei als günstig erwiesen, wenn keine Masterbatche eingesetzt werden, die weniger als 30 Gew.-% Polyester enthalten. Insbesondere das $SiO_2$-Partikel enthaltende Masterbatch sollte nicht mehr als 20 Gew.-%ig an $SiO_2$ sein (wg. der Gefahr der Gelbildung). Eine weitere Möglichkeit besteht darin, Partikel und Additive direkt bei der Folienextrusion in einem Zweischneckenextruder zuzugeben.

Wenn Einschneckenextruder verwendet werden, dann hat es sich als vorteilhaft erwiesen die Polyester vorher zu trocknen. Bei Verwendung eines Zweischneckenextruders mit Entgasungszone kann auf den Trocknungsschritt verzichtet werden.

Zunächst wird der Polyester bzw. die Polyestermischung der Schicht oder bei Mehrschichtfolien der einzelnen Schichten in Extrudern komprimiert und verflüssigt. Dann wird/werden die Schmelze/Schmelzen in einer Ein- bzw. Mehrschichtdüse zu flachen Schmelzefilmen ausgeformt, durch eine Breitschlitzdüse gepresst und auf einer Kühlwalze und einer oder mehreren Abzugswalzen abgezogen, wobei sie abkühlt und sich verfestigt.

Die erfindungsgemäße Folie wird biaxial orientiert, d.h. biaxial gestreckt. Die biaxiale Verstreckung der Folie wird am häufigsten sequenziell durchgeführt. Dabei wird vorzugsweise erst in Längsrichtung (d.h. in Maschinenrichtung, = MD-Richtung) und anschließend in Querrichtung (d.h. senkrecht zur Maschinenrichtung, = TD-Richtung) verstreckt. Das Verstrecken in Längsrichtung lässt sich mit Hilfe zweier entsprechend dem angestrebten Streckverhältnis verschieden schnell laufenden Walzen durchführen. Zum Querverstrecken benutzt man im Allgemeinen einen entsprechenden Kluppenrahmen.

Die Temperatur, bei der die Streckung durchgeführt wird, kann in einem relativ großen Bereich variieren und richtet sich nach den gewünschten Eigenschaften der Folie. Im Allgemeinen wird die Streckung in Längsrichtung in einem Temperaturbereich von 80 bis 130 °C (Aufheiztemperaturen 80 bis 130 °C) und in Querrichtung in einem Temperaturbereich von 90 °C (Beginn der Streckung) bis 140°C (Ende der Streckung) durchgeführt. Das Längsstreckverhältnis liegt im Bereich von 2,5:1 bis 4,5:1, bevorzugt von 2,8:1 bis 3,4:1. Ein Streckverhältnis oberhalb von 4,5 führt zu einer deutlich verschlechterten Herstellbarkeit (Abrisse). Das Querstreckverhältnis liegt allgemein im Bereich von 2,5:1 bis 5,0:1, bevorzugt von 3,2:1 bis 4:1. Ein höheres Querstreckverhältnis als 4,8 führt zu einer deutlich verschlechterten Herstellbarkeit (Abrisse) und sollte daher bevorzugt vermieden werden. Zum Erreichen der gewünschten Folieneigenschaften hat es sich als vorteilhaft erwiesen, wenn die Strecktemperatur (in MD und TD) unter 125 °C und bevorzugt

unter 118 °C liegt. Vor der Querstreckung können eine oder beide Oberfläche(n) der Folie nach den an sich bekannten Verfahren In-Line beschichtet werden. Die In-Line-Beschichtung kann bevorzugt zur Aufbringung der Beschichtung zur Transparenzerhöhung (Antireflexion) benutzt werden. Bei der nachfolgenden Thermofixierung wird die Folie über eine Zeitdauer von etwa 0,1 bis 10 s unter Spannung bei einer Temperatur von 150 bis 250 °C gehalten und zum Erreichen der bevorzugten Schrumpf- und Längungswerte um mindestens 1 %, bevorzugt mindestens 3 % und besonders bevorzugt mindestens 4 % in Querrichtung relaxiert. Diese Relaxation findet bevorzugt in einem Temperaturbereich von 150 bis 190 °C statt.

Bei einer besonders wirtschaftlichen Herstellungsweise der Polyesterfolie kann das Verschnittmaterial (Regenerat) in einer Menge von bis zu 70 Gew.%, bezogen auf das Gesamtgewicht der Folie, wieder der Extrusion zugeführt werden, ohne dass dabei die physikalischen Eigenschaften der Folie nennenswert negativ beeinflusst werden.

In einer weiteren Ausführungsform wird/werden die Beschichtung(en) gemäß der vorliegenden Erfindung mittels Off-Line-Technologie in einem zusätzlichen, der Folienherstellung nachgeordnetem, Prozessschritt auf die entsprechende Oberflächen der Polyesterfolie aufgebracht, wobei eine Gravurwalze (forward gravure) verwendet wird. Die Höchstgrenzen (d.h. maximaler Nassantrag) werden durch die Verfahrensbedingungen und die Viskosität der Beschichtungsdispersion festgelegt und finden ihre Obergrenze in der Verarbeitbarkeit der Beschichtungsdispersion.

**Anwendung**

Die erfindungsgemäßen Folien eignen sich hervorragend als hochtransparente Konvektionssperre, insbesondere zur Herstellung von Energiesparmatten in Gewächshäusern. Hierbei wird die Folie üblicherweise in schmale Streifen geschnitten, aus denen anschließend zusammen mit Polyestergarn (welches ebenfalls UV-stabilisiert sein sollte) ein Gewebe/Gelege hergestellt wird, welches im Gewächshaus aufgehängt wird. Die Streifen aus erfindungsgemäßer Folie können dabei mit Streifen aus anderen Folien kombiniert werden (insbesondere mit Folien mit einer Lichtstreuwirkung).

Alternativ kann auch die Folie selbst (Vollfläche, kein Gewebe) im Gewächshaus installiert werden.

**Analytik**

Zur Charakterisierung der Rohstoffe und der Folien wurden die folgenden Messmethoden benutzt:

*UV/Vis Spektren bzw. Transmission bei Wellenlänge x*

Die Folien wurden in Transmission in einem UV/Vis Zweistrahlspektrometer (Lambda 12 oder 35) der Firma Perkin Elmer (Waltham, USA) gemessen. Eine etwa (3 x 5) cm große Folienprobe wird dazu über eine Flachprobenhaltevorrichtung senkrecht zum Messstrahl in den Strahlengang eingelegt. Der Messstrahl führt über eine 50 mm-Ulbrichtkugel hin zum Detektor, wo die Intensität zur Bestimmung der Transparenz bei gewünschter Wellenlänge bestimmt wird.

Als Hintergrund dient Luft. Die Transmission wird bei der gewünschten Wellenlänge abgelesen.

*Transparenz und Trübung*

Die Prüfung dient zur Bestimmung der Trübung und Transparenz von Kunststoff-Folien, bei denen die optische Klarheit bzw. Trübung für den Gebrauchswert wesentlich ist. Die Messung erfolgt an dem Hazegard Hazemeter XL-21 1 der Fa. BYK Gardner (Wesel, Deutschland) nach ASTM D 1003-61.

*UV-Stabilität*

Die UV-Stabilität wurde wie in DE69731750 (DE von WO9806575) auf Seite 8 beschrieben bestimmt und der UTS Wert in % vom Ausgangswert angegeben, wobei die Bewitterungsdauer nicht 1000 sondern 2000 h betrug.

*SV-Wert (standard viscosity)*

Die Standardviskosität in verdünnter Lösung SV wurde, angelehnt an DIN 53 728 Teil 3, in einem Ubbelohde Viskosimeter bei (25 ± 0,05)°C gemessen. Dichloressigsäure (DCE) wurde als Lösemittel verwendet. Die Konzentration des gelösten Polymers betrug 1 g Polymer /100 mL reines Lösemittel. Die Auflösung des Polymers erfolgte 1 Stunde bei 60°C. Wurden die Proben nach dieser Zeit nicht vollständig gelöst, wurden noch bis zwei Auflösungsversuche jeweils 40 Min bei 80°C durchgeführt und die Lösungen anschließend 1 Stunde bei einer Drehzahl von 4100 min-1 zentrifugiert.

Aus der relativen Viskosität ($\eta_{rel} = \eta / \eta_s$) wird der dimensionslose SV-Wert wie folgt ermittelt:

$$SV = (\eta_{rel} - 1) \times 1000$$

Der Anteil an Partikeln in der Folie bzw. Polymerrohstoff wurde mittels Aschebestimmung ermittelt und durch entsprechende Mehreinwaage korrigiert. D.h.:

$$\text{Einwaage} = \frac{(\text{Einwaage entsprechend 100 \% Polymer})}{[(100 - \text{Partikelgehalt in Gew.-\%}) \cdot 0.01]}$$

*Bestimmung des Brechungsindex der Folie und der Beschichtung in Abhängigkeit der Wellenlänge*

Um den Brechungsindex eines Foliensubstrats und einer aufgebrachten Beschichtung in Abhängigkeit der Wellenlänge zu bestimmen, bedient man sich der spektroskopischen Ellipsometrie.

Dazu analysiert man zunächst die Basisfolie ohne Beschichtung. Zur Unterdrückung der Rückseitenreflexion raut man die Folienrückseite mit einem Schleifpapier mit möglichst feiner Körnung (beispielsweise P1000) an. Die Folie wird anschließend mit einem spektroskopischen Ellipsometer, z.B. einem M-2000 der Firma J. A. Woollam Co., Inc., vermessen, das mit einem rotierenden Kompensator ausgestattet ist. Die Maschinenrichtung (MD) der Probe liegt parallel zum Lichtstrahl. Die vermessene Wellenlänge liegt im Bereich von 370 bis 1000 nm, die Messwinkel betragen 65, 70 und 75 °.

Die ellipsometrischen Daten $\Psi$ und $\Delta$ werden anschließend mit einem Modell nachempfunden. Dazu eignet sich im vorliegenden Fall das Cauchy-Modell $n(\lambda) = A + \frac{B}{\lambda^2} + \frac{C}{\lambda^4}$ (Wellenlänge $\lambda$ in $\mu$m). Die Parameter A, B und C werden so variiert, dass die Daten möglichst gut mit dem gemessenen Spektrum $\Psi$ und $\Delta$ übereinstimmen. Zur Prüfung der Güte des Modells kann der MSE-Wert einbezogen werden, der möglichst klein sein soll und Modell mit gemessenen Daten ($\Psi(\lambda)$ und $\Delta(\lambda)$) vergleicht.

$$MSE = \sqrt{\frac{1}{3n - m} \sum_{i=1}^{n} \left[ (N_{E,i} - N_{G,i})^2 + (C_{E,i} - C_{G,i})^2 + (S_{E,i} - S_{G,i})^2 \right]} \cdot 1000$$

n = Anzahl Wellenlängen, m = Anzahl Fit Parameter, N = cos(2$\Psi$), C = sin(2$\Psi$) cos($\Delta$), S = sin(2$\Psi$) sin($\Delta$) [1]

[1] J. A. Woollam et al, Overview of variable-angle spectroscopic ellipsometry (VASE): I. Basic theory and typical applications, Proc. SPIE Vol. CR72, p. 3-28, Optical Metrology, Ghanim A. Al-Jumaily; Ed.

Die erhaltenen Cauchy-Parameter A, B und C für die Basisfolie erlauben die Berechnung des Brechungsindex n in Abhängigkeit der Wellenlänge, gültig im vermessenen Bereich 370 bis 1000 nm.

Die Beschichtung oder eine modifizierte coextrudierte Schicht kann analog analysiert werden. Die Parameter der Folienbasis sind nun schon bekannt und sollten bei der Modellierung konstant gehalten werden. Auch zur Bestimmung der Beschichtung der coextrudierte Schicht muss die Folienrückseite, wie oben beschrieben, angeraut werden. Hier kann man ebenfalls das Cauchy-Modell verwenden, um den Brechungsindex in Abhängigkeit der Wellenlänge zu beschreiben. Die jeweilige Schicht befindet sich jetzt jedoch auf dem bereits bekannten Substrat, was in der jeweiligen Auswertesoftware berücksichtigt wird (CompleteEASE oder WVase). Die Dicke der Schicht beeinflusst das erhaltene Spektrum und muss bei der Modellierung berücksichtigt werden.

*Bestimmung des Brechungsindex $n_D$ einer Flüssigkeit*

Die Bestimmung des Brechungsindex erfolgt mit dem Abbe-Refraktometer.

Es ist dafür Sorge zu tragen, dass das Abbe-Refraktometer eine Temperatur von 23 °C hat. Auf das vor der Messung gut gesäuberte untere Prisma wird mit Hilfe einer Pipette die zu analysierende Flüssigkeit aufgetragen, so dass die gesamte Prismenoberfläche bedeckt ist. Das zweite Prisma wird heruntergeklappt und fest angedrückt. Nun wird mit Hilfe der entsprechenden Rändelschraube die Anzeigeskala so weit gedreht, bis ein Übergang von hell auf dunkel im Sichtfenster zu sehen ist. Ist der Übergang von hell auf dunkel nicht scharf, werden mit Hilfe der entsprechenden

Rändelschraube die Farben so zusammengeführt, dass nur eine helle und eine dunkle Zone sichtbar ist. Die scharfe Übergangslinie wird mit Hilfe der entsprechenden Rändelschraube in den Kreuzungspunkt der beiden (im Okular) diagonalen Linien gebracht. Der nun in der Messskala angezeigte Wert wird abgelesen und in das Messprotokoll eingetragen.

*Brandverhalten*

Die Brandprüfung erfolgt wie in EN ISO 9773:1998/A1:2003 beschrieben. Die Muster werden vorher nur bei (23 ± 2) °C und einer relativen Feuchte von (50 ± 5) % konditioniert (für einen Tag). In diesem Sachverhalt ist der Prüfpunkt, ob das Folienmuster bis zur in der Norm beschriebenen 125 mm-Marke brennt, von besonderer Bedeutung. Außerdem wird bei der Prüfung notiert, ob die 125 mm-Marke nach der ersten, nach der zweiten Beflammung oder gar nicht erreicht wird.

**Beispiele**

In den Beispielen (erfindungsgemäß) kommen die folgenden Rohstoffe zum Einsatz:

PET1 = Polyethylenterephthalatrohstoff aus Ethylenglykol und Terephthalsäure mit einem SV Wert von 820 und DEG-Gehalt von 0,9 Gew.-% (Diethylenglykolgehalt als Monomer).

PET2 = Polyethylenterephthalatrohstoff mit einem SV-Wert von 730, der (6-Oxo-dibenzo-[c,e]-[1,2]-oxaphosphorin-6-ylmethyl)-bernsteinsäure-bis(2-hydroxyethyl)-ester (Bei der Verbindung handelt es sich um einen Flammstabilisatior der typischerweise in Masterbatchform der Extrusion zugesetzt wird vgl. EP1368405) als Comonomer enthält, wobei der Anteil an Phosphor aus diesem 18000 ppm im Rohstoff beträgt.

PET3 = Polyethylentererphthalatrohstoff aus Ethylenglykol und Dimethylterephthalat mit einem SV Wert von 820 und DEG-Gehalt von 0,9 Gew.% (Diethylenglykolgehalt als Monomer) und 1,5 Gew.% Siliziumdioxid-Pigment Sylobloc 46 mit einem d50 von 2,5 μm. Hergestellt mittels PTA Verfahren. Katalysator Kaliumtitanyloxalat mit 18 ppm Titan. Umesterungskatalysator Zinkacetat.

PET4 ± Polyethylenterephthalatrohstoff mit einem SV-Wert von 700, der 20 Gew.-% Tinuvin 1577 enthält. Der UV-Stabilisator hat folgende Zusammensetzung 2-(4,6-Diphenyl-1,3,5-triazin-2-yl)-5-(hexyl)oxy-phenol (®Tinuvin 1577 der Firma BASF, Ludwigshafen, Deutschland). Tinuvin 1577 hat einen Schmelzpunkt von 149 °C und ist bei 330 °C thermisch stabil.

Beispiel 1:

Deckschichten (A) und (A'): Mischung aus

10 Gew.-% PET4
7,2 Gew.-% PET3
82,8 Gew.-% PET1

Basisschicht (B): Mischung aus

90 Gew.-% PET1
10 Gew.-% PET4

Beschichtung, jeweils auf Deckschicht (A) und (A'):
Als Flammstabilisator 13 Gew.-% Alkylphosphonat (RUCO-COAT FR2200, Rudolf Chemie, City, Country) in Wasser einrühren, pH-Wert mittels wässriger Ammoniaklösung auf 7,5 bis 8,0 einstellen und unter Rühren 10 Gew.-% Acrylat (als wässrige Dispersion, EP-A-0144948, Bsp. 1 mit dem Tensid SDS und Tergitol 15-S-40) hinzugeben.

Die aufgeführten Rohstoffe wurden in je einem Extruder pro Schicht bei 292 °C aufgeschmolzen und durch eine dreischichtige Breitschlitzdüse auf eine auf 50 °C gekühlte Abzugswalze extrudiert. Die so erhaltene amorphe Vorfolie wurde dann zunächst längsgestreckt. Die längsgestreckte Folie wurde in einem Coronaentladegerät coronabehandelt und danach durch Reversgravurbeschichtung mit der beschriebenen Beschichtungsrezeptur beschichtet. An einer zweiten Reversgravurbeschichtung wurde analog die Beschichtung auf die bisher unbeschichtete Oberfläche aufgetragen. Danach wurde die Folie bei einer Temperatur von 100°C getrocknet und anschließend quergestreckt, fixiert

und aufgerollt (Enddicke der Folie 19,0 μm, Deckschichten je 1,0 μm). Die Bedingungen in den einzelnen Verfahrensschritten waren:

**Tabelle 1: Prozessparameter boPET-Herstellung für Beispiel 1.**

| | | | |
|---|---|---|---|
| Längsstreckung | Aufheiztemperatur | 75-115 | °C |
| | Strecktemperatur | 115 | °C |
| | Längsstreckverhältnis | 3,8 | |
| Querstreckung | Aufheiztemperatur | 100 | °C |
| | Strecktemperatur | 112 | °C |
| | Querstreckverhältnis (inklusive Streckung 1.Fixierfeld) | 3,9 | |
| Fixierung | Temperatur | 237- 150 | °C |
| | Dauer | 3 | s |
| | Relaxation in TD bei 200 - 150 °C | 5 | % |
| Fixierung | Temperatur 1. Fixierfeld | 170 | °C |

Die Dicke der trockenen Beschichtung beträgt auf beiden Seiten jeweils 80 nm.

Die Eigenschaften der so erhaltenen Folie sind in der Tabelle 3 widergegeben.

<u>Beispiele 2 bis 4 und Vergleichsbeispiele 1 bis 10:</u>

Die übrigen Beispiele basieren auf dem Herstellungsprozess analog Beispiel 1. Die Rezepturen für die Basisfolie und der Beschichtung sind in der folgenden Tabelle 2 beschrieben.

Die Beschichtung aus Vergleichsbeispiel 4 besteht aus 7,5 Gew.-% Polyurethan Neorez R600 von DSM und 7,5 Gew.-% Oxazolin-Vernetzer Epocros WS-700 von Sumitomo.

Die Beschichtung aus Vergleichsbeispiel 5 besteht aus einem Silikonansatz, wie er in EP-A-0769540, Beispiel 1 beschrieben ist.

Die Beschichtungen aus Vergleichsbeispiel 6 und 7 bestehen jeweils aus einer Mischung des Acrylats (EP-A-0144948) und eines Ammoniumphosphats (Exolit AP420 von Clariant, 45 Gew.-%ige, wässrige Dispersion).

**Tabelle 2: Übersicht Rezepturen der Beispiele und Vergleichsbeispiele**

| | Beispiel 1 | Beispiel 2 | Beispiel 3 | Beispiel 4 | Vergleichsbeispiel 1 | Vergleichsbeispiel 2 | Vergleichsbeispiel 3 | Vergleichsbeispiel 4 | Vergleichsbeispiel 5 | Vergleichsbeispiel 6 | Vergleichsbeispiel 7 | Vergleichsbeispiel 8 | Vergleichsbeispiel 9 | Vergleichsbeispiel 10 |
|---|---|---|---|---|---|---|---|---|---|---|---|---|---|---|
| Filmrezeptur | | | | | | | | | | | | | | |
| Coex A | 1 µm | 1 µm | 1 µm | 1 µm | 1 µm | 1 µm | 1 µm | 1 µm | 1 µm | 1 µm | 1 µm | 1 µm | 1 µm | 1 µm |
| PET4 | 10,0 | 10,0 | 10,0 | 10,0 | 10,0 | 10,0 | 10,0 | 10,0 | 10 | 10,0 | 10,0 | 10,0 | 10,0 | 10,0 |
| PET3 | 7,2 | 7,2 | 7,2 | 7,2 | 7,2 | 7,2 | 7,2 | 7,2 | 7,2 | 7,2 | 7,2 | 7,2 | 7,2 | 7,2 |
| PET1 | 82,8 | 82,8 | 82,8 | 82,8 | 82,8 | 82,8 | 82,8 | 82,8 | 82,8 | 82,8 | 82,8 | 74,8 | 74,8 | 74,8 |
| PET2 | | | | | | | | | | | | 8,0 | 8,0 | 8,0 |
| Basis | 17 µm | 17 µm | 17 µm | 17 µm | 17 µm | 17 µm | 17 µm | 17 µm | 17 µm | 17 µm | 17 µm | 17 µm | 17 µm | 17 µm |
| PET4 | 10,0 | 10,0 | 10,0 | 10,0 | 10,0 | 10,0 | 10,0 | 10,0 | 10 | 10,0 | 10,0 | 10,0 | 10,0 | 10,0 |
| PET2 | | | | | | | | | | | | 8,0 | 8,0 | |
| PET1 | 90,0 | 90,0 | 90,0 | 90,0 | 90,0 | 90,0 | 90,0 | 90,0 | 90 | 90,0 | 90,0 | 82,0 | 82,0 | 90,0 |
| Coex A' | 1 µm | 1 µm | 1 µm | 1 µm | 1 µm | 1 µm | 1 µm | 1 µm | 1 µm | 1 µm | 1 µm | 1 µm | 1 µm | 1 µm |
| PET4 | 10,0 | 10,0 | 10,0 | 10,0 | 10,0 | 10,0 | 10,0 | 10,0 | 10 | 10,0 | 10,0 | 10,0 | 10,0 | 10,0 |
| PET3 | 7,2 | 7,2 | 7,2 | 7,2 | 7,2 | 7,2 | 7,2 | 7,2 | 7,2 | 7,2 | 7,2 | 7,2 | 7,2 | 7,2 |
| PET1 | 82,8 | 82,8 | 82,8 | 82,8 | 82,8 | 82,8 | 82,8 | 82,8 | 82,8 | 82,8 | 82,8 | 74,8 | 74,8 | 74,8 |
| PET2 | | | | | | | | | | | | 8,0 | 8,0 | 8,0 |
| Beschichtungs-rezeptur | | | | | | | | | | | | | | |
| | beidseitig auf A&C | beidseitig auf A&C | beidseitig auf A&C | einseitig auf A | unbeschichtet | einseitig auf A | beidseitig auf A&C | beidseitig auf A&C | einseitig auf A | beidseitig auf A&C | beidseitig auf A&C | unbeschichtet | beidseitig auf A&C | beidseitig auf A&C |
| Acrylat | 10 | 5 | 15 | 10 | | 15 | 15 | | | 13 | 10 | | 15 | 15 |
| Alkylphosphonat | 13 | 25 | 5 | 15 | | | | | | | | | | |
| Ammoniumphosphat | | | | | | | | | | 2 | 5 | | | |
| Polyurethan | | | | | | | | 7,5 | | | | | | |
| Oxazolin Vernetzer | | | | | | | | 7,5 | | | | | | |

| | | | | | | | | | | | | | | |
|---|---|---|---|---|---|---|---|---|---|---|---|---|---|---|
| Silikonansatz EP-A-0769540 | | | | | | | | | 14 | | | | | |
| Anteil Phosphor in Antireflex-Beschichtung | 10,7% | 15,8% | 4,8% | 11,4% | | | | | | | | | | |
| Trockendicke [nm] (je Seite, falls doppelseitig beschichtet) | 80 | 80 | 105 | 80 | 0 | 80 | 80 | 80 | 105 | 80 | 80 | 0 | 60 | 60 |

**Tabelle 3: Eigenschaften der Beispiele und Vergleichsbeispiele**

| | Beispiel 1 | Beispiel 2 | Beispiel 3 | Beispiel 4 | Vergleichsbeispiel 1 | Vergleichsbeispiel 2 | Vergleichsbeispiel 3 | Vergleichsbeispiel 4 | Vergleichsbeispiel 5 | Vergleichsbeispiel 6 | Vergleichsbeispiel 7 | Vergleichsbeispiel 8 | Vergleichsbeispiel 9 | Vergleichsbeispiel 10 |
|---|---|---|---|---|---|---|---|---|---|---|---|---|---|---|
| Brechungsindex Coating nD 589 nm in MD | 1,503 | 1,483 | 1,522 | 1,523 | -/- | 1,508 | 1,508 | 1,475 | 1,410 | 1,510 | 1,509 | -/- | 1,508 | 1,508 |
| Transparenz [%] | 96,5 | 95,6 | 96,4 | 93,5 | 90,4 | 93,3 | 96,2 | 95,3 | 94,4 | 95,6 | 94,1 | 90,8 | 94,8 | 94,7 |
| Trübung [%] | 3,94 | 4,01 | 3,53 | 2,00 | 3,87 | 4,66 | 5,72 | 7,09 | 2,4 | 8,54 | 27,1 | 2,3 | 3,5 | 3,5 |
| Brandtest | | | | | | | | | | | | | | |
| Abgebrannt bis zu Halterung nach 1. und 2. Beflammung | 5 | 4 | 5 | 5 | 3 | 5 | 5 | 4 | 5 | 5 | 4 | 5 | 5 | 5 |
| Abgebrannt bis zu Halterung nach 1. Beflammung | 0 | 0 | 2 | 2 | 0 | 3 | 4 | 4 | 5 | 2 | 2 | 0 | 2 | 3 |
| Brandtest nach Bewitterung | | | | | | | | | | | | | | |
| Abgebrannt bis zu Halterung nach 1. und 2. Beflammung | 5 | 5 | 5 | 5 | 4 | 5 | 5 | 5 | 5 | | | | 5 | 5 |
| Abgebrannt bis zu Halterung nach 1. Beflammung | 1 | 0 | 2 | 3 | 1 | 2 | 5 | 5 | 5 | | | | 4 | 4 |

## Patentansprüche

1. Ein- oder Mehrschichtige, biaxial orientierte Polyesterfolie, die auf mindestens einer Folienoberfläche eine Beschichtung zur Transparenzerhöhung aufweist, **dadurch gekennzeichnet, dass**:

   • die Polyesterfolie einen Partikelanteil von maximal 0,5 Gew.-% aufweist und
   • die Beschichtung das Trocknungsprodukt einer Dispersion und/oder Lösung auf Wasser- oder Lösemittel-Basis darstellt, wobei

      (i) die Beschichtung eine Trockenschichtdicke von 60 - 130 nm aufweist,
      (ii) die Beschichtung mindestens ein Acrylsäure- und/oder Methacrylsäure-basiertes Polymer zur Transparenzerhöhung und
      (iii) mindestens ein Alkylphosphonat und/oder Oligo-alkylphosphonat als Flammstabilisator umfasst, wobei
      (iv) die Beschichtung einen Brechungsindex $n < 1,64$ aufweist und
      (v) der Phosphoranteil der Beschichtung zwischen 2 und 18 Gew.-% liegt, wobei der Brechungsindex gemäß Beschreibung bestimmt wird.

2. Polyesterfolie nach Anspruch 1, **gekennzeichnet durch**:

   • eine Transparenz von min. 93,5 %,
   • eine Trübung von max. 8%,
   • eine Flammhemmung, wobei im Brandtest die Anzahl der Proben, die nach der ersten Beflammung bis zum Haltering brennen bei unter 3 von 5 liegt, sowohl vor, als auch nach Bewitterung, wobei die Transparenz, die Trübung und die Flammhemmung gemäss Beschreibung bestimmt werden.

3. Polyesterfolie nach Anspruch 1 oder 2, **dadurch gekennzeichnet, dass** die Folie eine Transmission im Wellenlängenbereich von unterhalb 370 nm bis 300 nm aufweist, die bei jeder Wellenlänge in diesem Bereich bei kleiner 40 % liegt, wobei die Transmission gemäß Beschreibung bestimmt wird.

4. Polyesterfolie nach einem der Ansprüche 1 bis 3, **dadurch gekennzeichnet, dass** die Beschichtung zur Transparenzerhöhung ein Material enthält, welches einen geringeren Brechungsindex als die Polyesterfolie aufweist.

5. Polyesterfolie nach Anspruch 4, wobei der Brechungsindex des Materials, welches in der Beschichtung zur Transparenzerhöhung enthalten ist, bei einer Wellenlänge von 589 nm in Maschinenrichtung der Folie unterhalb von 1,64 liegt.

6. Polyesterfolie nach einem der Ansprüche 1 bis 5, **dadurch gekennzeichnet, dass** die Beschichtung mindestens zwei Komponenten enthält: mindestens

   - eine acrylische Komponente und
   - eine Komponente, die zur Flammstabilisierung dient.

7. Polyesterfolie nach Anspruch 6, **dadurch gekennzeichnet, dass** die acrylische Komponente aus mindestens 50 Gew.-% eines oder mehrerer polymerisierter acrylischer und/oder methacrylischer Monomere besteht.

8. Polyesterfolie nach Anspruch 6 oder 7, **dadurch gekennzeichnet, dass** die acrylische Komponente aus einem Ester der Acryl- oder Methacrylsäure besteht, bevorzugt einem Alkylester, dessen Alkylgruppe bis zu zehn C-Atome enthält, besonders bevorzugt aus einem Alkylacrylat zusammen mit einem Alkylmethacrylat.

9. Polyesterfolie nach Anspruch 6, 7 oder 8, **dadurch gekennzeichnet, dass** die acrylische Komponente weitere Comonomere in einem Anteil von 0 bis 15 Gew.-% umfasst, die dazu geeignet sind, unter Einwirkung von erhöhter Temperatur eine intermolekulare Vernetzung auszubilden.

10. Polyesterfolie nach einem der Ansprüche 6 bis 9, **dadurch gekennzeichnet, dass** die getrocknete Acrylatbeschichtung weniger als 10 Gew.% Wiederholungseinheiten, die ein aromatisches Strukturelement enthält.

11. Polyesterfolie nach einem der Ansprüche 1 bis 9, **dadurch gekennzeichnet, dass** die Beschichtung zur Transparenzerhöhung einen Flammstabilisator enthält, der folgende Struktur a) und/oder b) aufweist:

a)

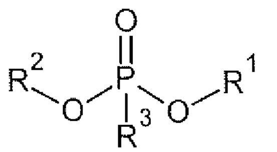

b)

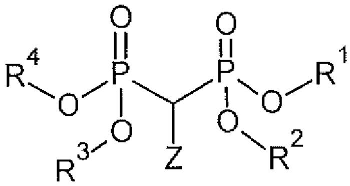

wobei

$R^1$, $R^2$, $R^3$ und $R^4$ unabhängig voneinander folgende Rest-Gruppen darstellen: H; lineare Alkyle mit $-(CH_2)_n-CH_3$ (n= 0-7); Isopropyl; Iso- oder Tertbutyl; lineare Alkylalkohole mit $-(CH_2)_n-CH_2-OH$ (n= 0-3), Isopropylalkohol oder lineare Alkylsäuren oder Alkylsäureester mit der Struktur-$(CH_2)_n-COOR^5$ (mit R5 = H; $-(CH_2)_n-CH_3$ (n= 0-3)); wobei mindestens eine Rest-Gruppe $R^1$-$R^4$ kein H darstellt;
Z stellt einen Rest dar, der durch folgende Gruppen dargestellt wird: H; lineare Alkyle mit $-(CH_2)_n-CH_3$ (n= 0-10); Isopropyl; Iso-oder Tertbutyl; lineare Alkylalkohole mit $-(CH_2)_n-CH_2-OH$ (n= 0-5), Isopropylalkohol oder lineare Alkylsäuren, oder Alkylsäureester mit der Struktur $-(CH_2)_n-COOR^5$ (mit $R^5$ = H; $-(CH_2)_n-CH_3$ (n= 0-3)).

**12.** Polyesterfolie nach Anspruch 11, wobei der Flammstabilisator ein Oligo- und/oder Alkylester der Phosphorsäure oder Phosphonsäure ist.

**13.** Verfahren zur Herstellung einer Polyesterfolie nach Anspruch 1, wobei der Polyester bzw. die Polyestermischung der Folienschicht oder bei Mehrschichtfolien der einzelnen Schichten in einem oder mehreren Extrudern komprimiert und verflüssigt wird und die entstandene(n) Schmelze/Schmelzen in einer Ein- oder Mehrschichtdüse zu flachen Schmelzefilmen ausgeformt wird/werden, die dann durch eine Breitschlitzdüse gepresst und auf einer Kühlwalze und einer oder mehreren Abzugswalzen abgezogen werden, wobei die dabei entstehende Vorfolie abkühlt und sich verfestigt und wobei dann die Vorfolie biaxial orientiert, d.h. biaxial gestreckt, thermofixiert und dann aufgerollt wird, wobei die Folie im Verlauf der biaxialen Orientierung ein oder beidseitig mit einer Beschichtung zur Transparenzerhöhung beschichtet wird, **dadurch gekennzeichnet, dass** die Beschichtung zur Transparenzerhöhung eine Dispersion und/oder Lösung auf Wasser- oder Lösemittel-Basis darstellt, wobei die Beschichtung mindestens ein Acrylsäure- und/oder Methacrylsäure-basiertes Polymer zur Transparenzerhöhung und mindestens ein Alkylphosphonat und/oder Oligo-alkylphosphonat als Flammstabilisator umfasst, wobei die Beschichtung einen Brechungsindex $n < 1{,}64$ aufweist und der Phosphoranteil der Beschichtung zwischen 2 und 18 Gew.-% liegt, wobei der Brechungsindex gemäß Beschreibung bestimmt wird.

**14.** Verwendung einer Polyesterfolie nach Anspruch 1 als hochtransparente Konvektionssperre .

**15.** Verwendung nach Anspruch 14 zur Herstellung von Energiesparmatten.

## Claims

**1.** Single-layer or multi-layer, biaxially oriented polyester film bearing on at least one film surface a coating for transparency increase, **characterized in that**:

- the polyester film has a particle fraction of not more than 0.5 % by weight, and
- the coating represents the product of drying of a water-based or solvent-based solution and/or dispersion, where

(i) the coating has a dry coat thickness of 60 - 130 nm,
(ii) the coating for transparency increase comprises at least one acrylic acid-based and/or methacrylic acid-based polymer and
(iii) comprises as flame stabilizer at least one alkylphosphonate and/or oligo-alkylphosphonate, where
(iv) the coating has a refractive index $n < 1.64$ and
(v) the phosphorus fraction of the coating is between 2 and 18 % by weight, the refractive index being determined according to the description.

2. Polyester film according to Claim 1, **characterized by**:

• a transparency of min. 93.5 %,
• a haze of max. 8 %,
• a flame retardancy where the number of samples in a fire test which burn up to the retaining ring after the first flame application is less than 3 out of 5 both before and after weathering,
the transparency, the haze and the flame retardancy being determined according to the description.

3. Polyester film according to Claim 1 or 2, **characterized in that** the film has a transmission in the wavelength range from below 370 nm to 300 nm that is less than 40 % at every wavelength in this range,
the transmission being determined according to the description.

4. Polyester film according to any of Claims 1 to 3, **characterized in that** the coating comprises for transparency increase a material which has a lower refractive index than the polyester film.

5. Polyester film according to Claim 4, where the refractive index of the material comprised for transparency increase in the coating is below 1.64 in the machine direction of the film at a wavelength of 589 nm.

6. Polyester film according to any of Claims 1 to 5, **characterized in that** the coating comprises at least two components: at least

- an acrylic component and
- a component serving for flame stabilization.

7. Polyester film according to Claim 6, **characterized in that** the acrylic component consists of at least 50 % by weight of one or more polymerized acrylic and/or methacrylic monomers.

8. Polyester film according to Claim 6 or 7, **characterized in that** the acrylic component consists of an ester of acrylic or methacrylic acid, preferably an alkyl ester whose alkyl group contains up to 10 carbon atoms, more preferably of an alkyl acrylate together with an alkyl methacrylate.

9. Polyester film according to Claim 6, 7 or 8, **characterized in that** the acrylic component comprises further comonomers in a fraction of 0 to 15 % by weight which are capable of forming an intermolecular crosslinking on exposure to elevated temperature.

10. Polyester film according to any of Claims 6 to 9, **characterized in that** the dried acrylate coating comprises less than 10 % by weight of repeat units which comprise an aromatic structural element.

11. Polyester film according to any of Claims 1 to 9, **characterized in that** the coating comprises for transparency increase a flame stabilizer having the following structure a) and/or b):

a)

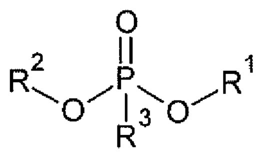

b)

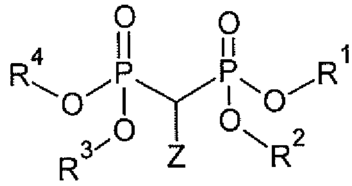

where

$R^1$, $R^2$, $R^3$ and $R^4$ independently of one another represent the following radical groups: H; linear alkyls with $-(CH_2)_n-CH_3$ (n = 0-7); isopropyl; isobutyl or tert-butyl; linear alkyl alcohols with $-(CH_2)_n-CH_2-OH$ (n = 0-3), isopropyl alcohol or linear alkyl acids or alkyl acid esters with the structure $-(CH_2)_n-COOR^5$ (with $R^5$ = H; $-(CH_2)_n-CH_3$ (n = 0-3)); where at least one radical group $R^1$-$R^4$ does not represent H;
Z represents a radical which is represented by the following groups: H; linear alkyls with $-(CH_2)_n-CH_3$ (n := 0-10) ; isopropyl; isobutyl or tert-butyl; linear alkyl alcohols with - $(CH_2)_n-CH_2-OH$ (n = 0-5), isopropyl alcohol or linear alkyl acids or alkyl acid esters with the structure $-(CH_2)_n-COOR^5$ (with $R^5$ = H; $-(CH_2)_n-CH_3$ (n = 0-3)).

**12.** Polyester film according to Claim 11, where the flame stabilizer is an oligoester and/or alkyl ester of phosphoric acid or phosphonic acid.

**13.** Method for producing a polyester film according to Claim 1, where the polyester or polyester mixture of the film layer or, in the case of multi-layer films, of the individual layers is compressed and liquefied in one or more extruders and the resultant melt/melts is/are shaped into flat melt-films in a single-phase or multi-phase die, which are then pressed through a slot die and taken off on a chill roll and one or more take-off rolls, where the resultant prefilm is cooled and solidifies and where then the prefilm is biaxially oriented, i.e. biaxially drawn, heat-set and then wound, the film being coated on one or both sides, in the course of the biaxial orientation, with a coating for transparency increase, **characterized in that** the coating for transparency increase represents a water-based or solvent-based solution and/or dispersion, where the coating for transparency increase comprises at least one acrylic acid-based and/or methacrylic acid-based polymer and as flame stabilizer comprises at least one alkylphosphonate and/or oligo-alkylphosphonate, where the coating has a refractive index $n < 1.64$ and the phosphorus fraction of the coating is between 2 and 18 % by weight,
the refractive index being determined according to the description.

**14.** Use of a polyester film according to Claim 1 as high-transparency convection barrier.

**15.** Use according to Claim 14 for producing energy-saving sheets.

## Revendications

**1.** Film polyester à une ou plusieurs couches, orienté biaxialement, pourvu d'un revêtement sur au moins une surface de film pour augmenter la transparence, **caractérisé en ce que:**

• le film polyester a une teneur en particules d'au plus 0,5% en poids et
• le revêtement représente le produit de séchage d'une dispersion et/ou solution à base d'eau ou de solvant, dans lequel

(i) le revêtement a une épaisseur de film sec de 60 - 130 nm,
(ii) le revêtement comprend au moins un polymère à base d'acide acrylique et/ou d'acide méthacrylique pour augmenter la transparence et
(iii) au moins un phosphonate d'alkyle et/ou un oligo-alkylphosphonate comme stabilisateur de flamme, dans lequel
(iv) le revêtement a un indice de réfraction $n < 1,64$ et
(v) la teneur en phosphore du revêtement est comprise entre 2 et 18% en poids, dans lequel l'indice de réfraction est déterminé selon la description.

**2.** Film polyester selon la revendication 1, **caractérisé par**:

• une transparence d'au moins 93,5%,
• une turbidité de 8% maximum,
• un caractère ignifuge, dans lequel, lors de l'essai au feu, le nombre d'échantillons qui brûlent après la première exposition à la flamme jusqu'à l'anneau de retenue est inférieur à 3 sur 5, avant ainsi qu'après l'érosion, dans lequel la transparence, la turbidité et le caractère ignifuge sont déterminés selon la description.

3. Film polyester selon la revendication 1 ou 2, **caractérisé en ce que** le film a une transmission dans la gamme de longueurs d'onde inférieure à 370 nm à 300 nm, qui est inférieure à 40% pour chaque longueur d'onde dans cette gamme, dans lequel la transmission est déterminée selon la description.

4. Film polyester selon l'une des revendications 1 à 3, **caractérisé en ce que** le revêtement pour augmenter la transparence comprend un matériau qui a un indice de réfraction inférieur à celui du film de polyester.

5. Film de polyester selon la revendication 4, dans lequel l'indice de réfraction du matériau qui est contenu dans le revêtement pour augmenter la transparence, est inférieur à 1,64 à une longueur d'onde de 589 nm dans le sens machine du film.

6. Film polyester selon l'une des revendications 1 à 5, **caractérisé en ce que** le revêtement comprend au moins deux composants: au moins

- un composant acrylique et
- un composant qui sert à stabiliser la flamme.

7. Film polyester selon la revendication 6, **caractérisé en ce que** le composant acrylique est constitué d'au moins 50% en poids d'un ou plusieurs monomères acryliques et/ou méthacryliques polymérisés.

8. Film polyester selon la revendication 6 ou 7, **caractérisé en ce que** le composant acrylique consiste en un ester d'acide acrylique ou méthacrylique, de préférence un ester d'alkyle dont le groupe alkyle comprend jusqu'à dix atomes de carbone, de manière particulièrement préférée un acrylate d'alkyle avec un méthacrylate d'alkyle.

9. Film polyester selon la revendication 6, 7 ou 8, **caractérisé en ce que** le composant acrylique comprend en outre des comonomères à raison de 0 à 15% en poids, qui conviennent pour former une réticulation intermoléculaire sous l'action d'une température élevée.

10. Film polyester selon l'une des revendications 6 à 9, **caractérisé en ce que** le revêtement d'acrylate séché comprend moins de 10% en poids d'unités répétitives qui comprennent un élément structurel aromatique.

11. Film polyester selon l'une des revendications 1 à 9, **caractérisé en ce que** le revêtement pour augmenter la transparence comprend un stabilisant de flamme, qui a la structure suivante a) et/ou b):

a)

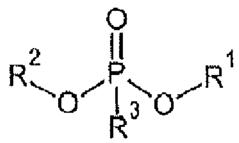

b)

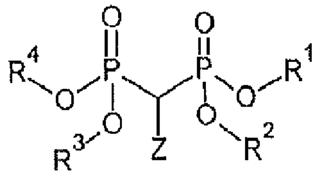

dans lequel

$R^1$, $R^2$, $R^3$ et $R^4$ représentent indépendamment les groupes résiduels suivants:
H; alkyles linéaires avec $-(CH_2)_n-CH_3$ (n = 0-7); isopropyle; iso- ou tert-butyle; alcools alkyliques linéaires avec $-(CH_2)_n-CH_2-OH$ (n = 0-3), alcool isopropylique ou acides alkyliques linéaires ou esters d'acide alkylique de structure $-(CH_2)_n-COOR^5$ (avec R5 = H; $-(CH_2)_n-CH_3$ (n = 0-3)); où au moins un groupe radical $R^1$-$R^4$ ne représente aucun H;
Z représente un résidu représenté par les groupes suivants:
H; alkyles linéaires avec $-(CH_2)_n-CH_3$ (n = 0-10); isopropyle; isobutyle ou tert-butyle; alcools alkyliques linéaires avec $-(CH_2)_n-CH_2-OH$ (n = 0-5), alcool isopropylique ou alkylacides linéaires, ou esters d'acides alkyliques de structure $-(CH_2)_n-COOR^5$ (avec $R^5$ = H; $-(CH_2)_n-CH_3$ (n = 0-3)).

**12.** Film de polyester selon la revendication 11, dans lequel le stabilisant de flamme est un oligo- et/ou un ester alkylique d'acide phosphorique ou d'acide phosphonique.

**13.** Procédé de production d'un film de polyester selon la revendication 1, dans lequel le polyester ou le mélange de polyester de la couche de film ou, dans le cas de films multicouches, les couches individuelles, est comprimé et liquéfié dans une ou plusieurs extrudeuses, et la ou les masse(s) fondue(s) résultante(s) est/sont formée(s), dans une buse monocouche ou multicouche, en films fondus plats, qui sont ensuite pressés à travers une filière à fente et soutirés sur un rouleau de refroidissement et un ou plusieurs rouleaux de décollage, le pré-film résultant étant ainsi refroidi et solidifié et le pré-film étant ensuite orienté biaxialement, c'est-à-dire étiré biaxialement, thermofixé et puis enroulé, dans lequel lors de l'orientation biaxiale, le film est revêtu sur une ou deux faces d'un revêtement pour augmenter la transparence, **caractérisé en ce que** le revêtement pour augmenter la transparence est une dispersion et/ou solution à base d'eau ou de solvant, le revêtement comprenant au moins un polymère à base d'acide acrylique et/ou d'acide méthacrylique pour augmenter la transparence et au moins un alkyl phosphonate et/ou oligo-alkyl phosphonate en tant que stabilisateur de flamme, dans lequel le revêtement a un indice de réfraction $n < 1,64$ et la teneur en phosphore du revêtement est comprise entre 2 et 18% en poids, dans lequel l'indice de réfraction est déterminé selon la description.

**14.** Utilisation d'un film de polyester selon la revendication 1 comme barrière de convection hautement transparente.

**15.** Utilisation selon la revendication 14 pour la production de tapis à économie d'énergie.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 3064549 A
- EP 1368405 A
- EP 1441001 A
- EP 1527110 A
- EP 3251841 A
- EP 0144948 A
- FR 2200, Rudolf Chemie
- DE 69731750
- WO 9806575 A
- EP 0769540 A


### In der Beschreibung aufgeführte Nicht-Patentliteratur


- *CHEMICAL ABSTRACTS,* 35948-25-5
- *CHEMICAL ABSTRACTS,* 5945-33-5
- **J. A. WOOLLAM et al.** Overview of variable-angle spectroscopic ellipsometry (VASE): I. Basic theory and typical applications. *Proc. SPIE,* vol. CR72, 3-28
- Optical Metrology